# EUROPEAN PATENT SPECIFICATION

(11) **EP 4 617 139 B1**
(45) Date of publication and mention of the grant of the patent: **02.09.2026**
(21) Application number: 22965032.0
(22) Date of filing: 07.11.2022
(51) Int. Cl.: B60W 50/16, B60L 15/20, B60T 7/12, B60W 10/06, B60W 10/08, B60W 10/20, B60W 10/30, B60W 30/08, B60W 40/02, B62J 27/00, B62J 50/22, F02D 9/02, F02D 29/02, F02D 41/12, F02P 5/145, B60W 50/14

(54) **VEHICLE CONTROL SYSTEM**
FAHRZEUGSTEUERUNGSSYSTEM
SYSTÈME DE COMMANDE DE VÉHICULE

(43) Date of publication of application: 17.09.2025
(73) Proprietor: Astemo, Ltd., Tokyo 100-0004 (JP)
(72) Inventor: AKIMOTO, Yutaka, Hitachinaka-shi, Ibaraki 312-8503 (JP)
(74) Representative: v. Bezold & Partner Patentanwälte - PartG mbB
(86) International application number: PCT/JP2022/041331
(87) International publication number: WO 2024/100705

(56) References cited:
- WO-A1-2019/087579
- WO-A1-2021/065671
- DE-A1- 102018 221 697
- JP-A- 2016 165 943
- JP-A- 2020 090 203
- JP-B2- 6 817 417
- US-A1- 2017 306 876
- US-A1- 2021 139 043
- US-A1- 2022 340 225

## Description

### TECHNICAL FIELD

The present invention relates to a vehicle control system and particularly relates to a vehicle control system executing control that can deal with a vehicle forward collision warning.

### BACKGROUND ART

In recent years, advanced driver-assistance systems (ADAS) having a function of assisting a driving operation by a vehicle's driver have been studied and developed from a point of view of improving the safety of a vehicle and a traffic environment where the vehicle runs, for example. One of such advanced driver-assistance systems which has a warning function is a forward collision warning (FCW) system. This forward collision warning system monitors a vehicle speed of an own vehicle, a relative vehicle speed between the own vehicle and a preceding vehicle, and a distance between the own vehicle and the surrounding environment and has a function of warning a driver of a possibility of collision when the own vehicle is too close to the preceding vehicle, for example.

Under such circumstances, Patent Document 1 relates to a control device, a control method, and a brake system and discloses a configuration in which, before a control mode causing a motorcycle to perform an automatic emergency deceleration operation is started in response to trigger information generated in accordance with the surrounding environment of the motorcycle, a first notification and a second notification that notify a driver that the automatic emergency deceleration operation is performed are started in turn, the first notification notifying the driver that the automatic emergency deceleration operation is performed in a state where no external force is applied to the driver, and the second notification notifying the driver that the automatic emergency deceleration operation is performed by application of external force to the driver.

Further prior art is known from US2022/340225A1, DE102018221697A1 and US2017/306876A1.

### PRIOR ART DOCUMENT

### PATENT DOCUMENT

Patent Document 1: Patent Publication No. 6817417

### SUMMARY OF THE INVENTION

### PROBLEM TO BE SOLVED BY THE INVENTION

However, according to the study by the inventor of the present application, the external force used in the second notification in Patent Document 1 is inertia force that merely generates relatively small deceleration for the driver, and Patent Document 1 employs a configuration that intends to prompt the driver to perform an avoidance operation by repeating application of the relatively small deceleration caused by such inertia force to the driver every set time, while preventing increase in the deceleration generated in the motorcycle, but fails to disclose or suggest a configuration that can gradually make the degree of warning to the driver higher to give a strong warning or can sequentially make the degree of external force applied to the driver or the degree of deceleration generated in the motorcycle higher to realize strong external force or strong deceleration, when the own vehicle approaches an obstacle ahead of the own vehicle and the possibility of collision with the obstacle increases. In addition, since the first notification relies on hearing or sight in Patent Document 1, there is a possibility that the driver does not recognize that the notification is being made, in particular, in a case of a saddle type vehicle such as a motorcycle being exposed to the surrounding environment. Further, as for the second notification following the first notification and repeating small and monotonous deceleration, there is a possibility that the driver does not understand the contents thereof. Accordingly, if the automatic emergency deceleration operation is performed in such a state of driver's awareness, the avoidance operation may be insufficient or appropriate control of the vehicle attitude may be insufficient as the driver panics. In particular, in a case of a saddle type vehicle, the vehicle may exhibit an unstable behavior leading to overturning. Thus, there is room for improvement in the deceleration operation. Furthermore, even in a case of a four-wheeled vehicle, there is a possibility that the first notification is not recognized and the second notification is not understood, depending on the driving condition at that time. Accordingly, if the automatic emergency deceleration operation is performed in such a state of driver's awareness, control of the vehicle attitude may be insufficient or the vehicle may exhibit an unstable behavior, as with a saddle type vehicle. Thus, there is room for improvement in the deceleration operation.

The present invention has been achieved through the above studies, and an object of the present invention is to obtain the degree of urgency based on detection information of a situation ahead of a vehicle, warn a driver of the degree of urgency gradually, prompt an emergency avoidance operation of the vehicle, and contribute to prompt of gradual deceleration of the vehicle.

### MEANS FOR SOLVING THE PROBLEM

In order to achieve the above object, a vehicle control system mounted on a vehicle according to the present invention comprises: a forward situation detection device configured to detect a situation ahead of the vehicle; a vibration source configured to generate vibration to be transmitted to a driver of the vehicle; and a controlling unit configured to, for each degree of urgency obtained by using information detected by the forward situation detection device, execute control of changing a state of the vibration of the vibration source to a state corresponding to the degree of the urgency.

Furthermore, according to the present invention, the vibration source is at least one of a group consisting of an engine that is a driving source of the vehicle, an electric motor that is the driving source, a brake of the vehicle, a vibration device causing a handle of the vehicle to vibrate, a vibration device causing a seat of the vehicle to vibrate, and a vibration device causing a step of the vehicle to vibrate.

Furthermore, according to the present invention, in the control, the controlling unit changes a return period of return from a reduced operating state in which an output of the driving source is reduced to a normal operating state in which the output is not reduced in accordance with the degree of the urgency, to change the state of the vibration of the driving source to the state corresponding to the degree of the urgency.

Optionnaly, in the control, the controlling unit makes the return period shorter as the degree of the urgency becomes higher, to make a change period at which the state of the vibration of the driving source is changed to the state corresponding to the degree of the urgency shorter.

Optionnaly, in the control, the controlling unit makes a length of time during which the reduced operating state is exhibited longer as the degree of the urgency becomes higher.

Optionnaly, in the control, the controlling unit reduces an output of the engine to place the engine in the reduced operating state by reducing an amount of a fuel supply to the engine or prohibiting the fuel supply.

Optionnaly, in the control, the controlling unit reduces an output of the engine to place the engine in the reduced operating state by retarding a timing of ignition of the engine or prohibiting the ignition.

Optionnaly, in the control, the controlling unit reduces an output of the engine to place the engine in the reduced operating state by reducing an opening degree of a throttle valve of the engine or setting the opening degree to full closing dgree.

Optionnaly, when the driver has an intention to decelerate, the controlling unit prohibits execution of the control.

### EFFECT OF THE INVENTION

According to the vehicle control system of the present invention described above, the vehicle control system includes a forward situation detection device configured to detect a situation ahead of a vehicle, a vibration source configured to generate vibration to be transmitted to a driver of the vehicle, and a controlling unit configured to execute, for each degree of urgency obtained by using information detected by the forward situation detection device, control that changes a state of vibration of the vibration source to a state corresponding to the degree of urgency. Accordingly, it is possible to, for each degree of urgency obtained based on detection information of the situation ahead of the vehicle, warn the driver of the degree of urgency gradually to prompt an emergency avoidance operation of the vehicle and contribute to gradual deceleration of the vehicle. Even in a case of a lightweight vehicle such as a saddle type vehicle, it is possible to decelerate the vehicle in a mode in which the stability thereof is not impaired while preventing the driver from panicking.

According to the present invention, the vibration source is at least one of a group consisting of an engine that is a driving source of the vehicle, an electric motor that is the driving source, a brake of the vehicle, a vibration device that causes a handle of the vehicle to vibrate, a vibration device that causes a seat of the vehicle to vibrate, and a vibration device that causes a step of the vehicle to vibrate. Therefore, by using an existing mounted part of the vehicle or adding and using a component that does not have an excessive influence in terms of weight, size, cost, and the like, it is possible to, for each degree of urgency, warn the driver of the degree of urgency gradually to prompt the emergency avoidance operation of the vehicle and contribute to gradual deceleration of the vehicle.

According to the vehicle control system of the present invention, the controlling unit changes a return period of return from a reduced operating state in which an output of the driving source is reduced to a normal operating state in which the output is not reduced, in accordance with the degree of urgency, thereby changing the state of vibration of the driving source to the state corresponding to the degree of urgency. Therefore, when the return from the reduced operating state to the normal operating state is made to change the state of vibration, it is possible to apply accelerating driving force to the vehicle to move the dynamic center of gravity of the vehicle to a driving wheel side, not to a steering wheel side. Accordingly, even in a case of a lightweight vehicle such as a saddle type vehicle, it is possible to, for each degree of urgency, gradually warn the driver of the degree of urgency in a mode in which the stability thereof is not impaired to prompt an emergency avoidance operation of the vehicle and perform gradual deceleration of the vehicle more reliably.

Optionnaly, the controlling unit makes the return period shorter as the degree of urgency becomes higher, thereby making a change period at which the state of vibration of the driving source is changed to the state corresponding to the degree of urgency shorter. Therefore, it is possible to warn the driver of the degree of urgency more clearly in accordance with the degree of urgency.

Optionnaly, the controlling unit makes a length of time during which the reduced operating state is exhibited longer as the degree of urgency becomes higher. Therefore, it is possible to perform gradual deceleration of the vehicle more reliably in accordance with the degree of urgency.

Optionnaly, the controlling unit reduces an output of the engine to place the engine in the reduced operating state by reducing the amount of a fuel supply to the engine or prohibiting the fuel supply. Therefore, it is possible to realize the reduced operating state of the engine more reliably in a mode in which unnecessary influences on the exhaust gas characteristics are reduced.

Optionnaly, the controlling unit reduces an output of the engine to place the engine in the reduced operating state by retarding a timing of ignition of the engine or prohibiting the ignition. Therefore, it is possible to realize the reduced operating state of the engine more reliably.

Optionnaly, the controlling unit reduces an output of the engine to place the engine in the reduced operating state by reducing an opening degree of a throttle valve of the engine or setting the opening degree to full closing dgree. Therefore, it is possible to realize the reduced operating state of the engine more reliably in a mode in which unnecessary influences on the exhaust gas characteristics are reduced.

Optionnaly, when the driver has an intention to decelerate, the controlling unit prohibits execution of control that changes, for each degree of urgency, the state of vibration of the vibration source to the state corresponding to the degree of urgency. Therefore, it is possible to prioritize the driver's intention to decelerate, allow the driver himself to perform the emergency avoidance operation of the vehicle, and allow the driver himself to decelerate the vehicle.

### BRIEF DESCRIPTION OF THE DRAWINGS

[FIG. 1] FIG. 1 is a schematic diagram illustrating the right side of a vehicle with a vehicle control system according to an embodiment of the present invention mounted thereon.
[FIG. 2] FIG. 2 is a block diagram illustrating a configuration of the vehicle control system according to the present embodiment.
[FIG. 3] FIG. 3 is a timing chart illustrating chronological changes in an engine output and a vehicle speed when the vehicle control system according to the present embodiment executes control that changes, for each degree of urgency, a state of vibration of an engine to a state corresponding to the degree of urgency, as an example.

### EMBODIMENT FOR CARRYING OUT THE INVENTION

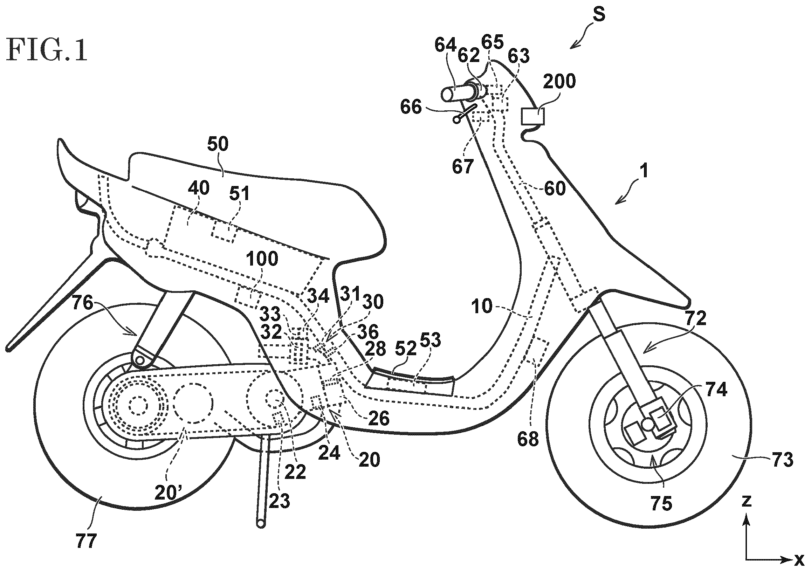

A vehicle control system according to an embodiment of the present invention will be explained below in detail with reference to the drawings as appropriate, with an example in which the vehicle control system is applied to a saddle type vehicle having an engine mounted thereon. In FIG. 1, an x-axis and a z-axis form a two-axis orthogonal coordinate system. The forward direction is represented by the positive direction of the x-axis, and the upward direction is represented by the positive direction of the z-axis.

### [Configuration related to vehicle control system]

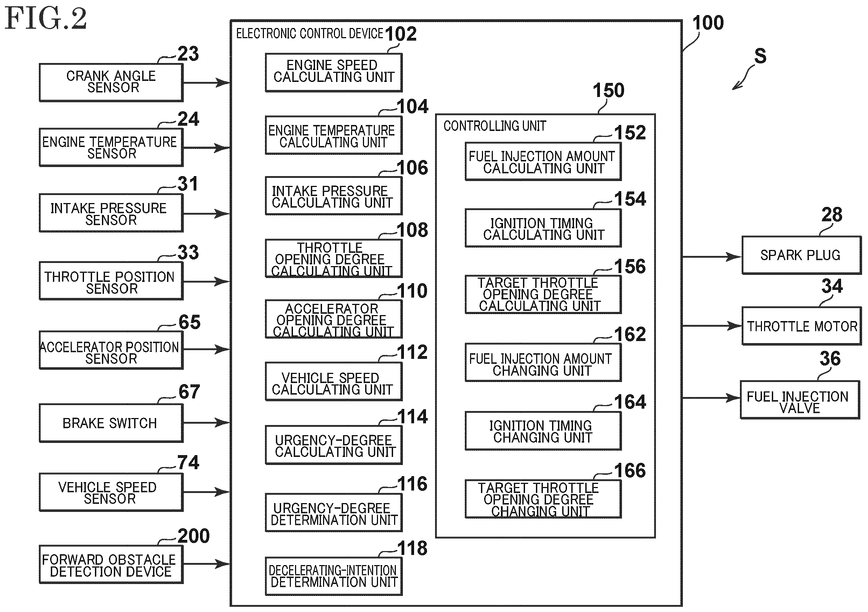

First, a configuration related to the vehicle control system according to the present embodiment is described in detail with reference to FIGS. 1 and 2, also referring to a configuration of a saddle type vehicle on which an electronic control device and a forward situation detection device of the system are mounted.

FIG. 1 is a schematic diagram illustrating the right side of a vehicle with the vehicle control system according to the present embodiment mounted thereon, and FIG. 2 is a block diagram illustrating a configuration of the vehicle control system according to the present embodiment.

As illustrated in FIGS. 1 and 2, a vehicle control system S is mounted on a vehicle 1 that is typically a saddle type vehicle such as a two-wheeled automobile. The vehicle control system S changes, for each degree of urgency in a driving environment ahead of the vehicle 1, a state of vibration of a predetermined vibration source to a state corresponding to the degree of urgency, transmits vibration in the changed vibration state to a driver, and applies the vibration to the driver. The vehicle control system S may be mounted on a four-wheeled automobile other than a saddle type vehicle, in principle.

In more detail, the vehicle control system S includes an electronic control device 100 mounted on the vehicle 1 to control an operating state of an engine 20 that is an internal combustion engine as a driving source mounted on a frame member 10 that is a skeleton member of the vehicle 1, and a forward obstacle detection device 200 mounted on the vehicle 1 to detect an obstacle ahead of the vehicle 1. The driving source mounted on the vehicle 1 is not limited to the engine 20 that is an internal combustion engine, and may be an electric motor or a hybrid type that is a combination of them. Further, the vibration source mounted on the vehicle 1 is not limited to such a driving source. In principle, it is also possible to use a vibration device that is attached to the vehicle 1 near the place of contact between a driver and the vehicle 1 and generates vibration so as to be able to transmit and apply the vibration to the driver, and a brake mounted on the vehicle 1 alone or in combination in an appropriate manner. It suffices that such a vibration device includes a vibrator typically operating on electric power and is configured to transmit its vibration to outside. Such a vibration device can also be used together with the driving source or the brake.

The engine 20 is an internal combustion engine that is typically a water-cooled four-stroke cycle engine. A crank angle sensor 23 is attached to a crankcase (reference sign thereof is omitted) of the engine 20, the crank angle sensor 23 outputting an electric signal indicating a rotation angle of a crankshaft 22 (crank angle) to the electronic control device 100. An engine temperature sensor 24 is attached to a cylinder block (reference sign thereof is omitted) of the engine 20, the engine temperature sensor 24 outputting an electric signal indicating the temperature of a coolant of the engine 20 to the electronic control device 100. A spark plug 28 is attached to a head 26 of the engine 20 to face a combustion chamber (reference sign thereof is omitted) of the engine 20.

An intake pipe 30 communicating with an air intake (not illustrated) of the engine 20 is attached to the head 26 of the engine 20. An intake pressure sensor 31 outputting an electric signal indicating an intake pressure of the engine 20 to the electronic control device 100 is attached to the intake pipe 30 on the side closer to the head 26 of the engine 20, and a throttle valve 32 that can rotate to change an intake-flow cross-sectional area of an intake passage in the intake pipe 30 is attached on the upstream side of the intake pressure sensor 31.

A throttle position sensor 33 is attached to a housing (not illustrated) accommodating the throttle valve 32, the throttle position sensor 33 outputting an electric signal indicating an opening degree of the throttle valve 32 to the electronic control device 100. Although the throttle valve 32 is described as a configuration example that is driven to rotate by rotation of an electric throttle motor 34, a configuration in which the throttle valve 32 is driven by a mechanical push-pull wire or the like in place of the throttle motor 34 may be employed. Further, a fuel injection valve 36 is attached to the intake pipe 30 on the side closer to the head 26 of the engine 20 so as to inject a fuel into the intake pipe 30. The fuel injection valve 36 may be configured to be attached to the head 26 and directly inject the fuel into a combustion chamber of the engine 20.

A storage member 40 that stores a helmet when it is not used in a storage room therein is attached to the frame member 10. Further, a seat 50 is attached to the frame member 10 above the storage member 40 so as to be able to open and close the storage room of the storage member 40. In a case where a vibration source generating vibration to be transmitted to the seat 50 is necessary, a seat vibration device 51 is attached to the storage member 40 so as to allow vibration to be transmitted to the seat 50. In addition, step members (steps) 52 serving as footrests for the driver are attached to the frame member 10. In a case where a vibration source generating vibration to be transmitted to the step members 52 is necessary, a step vibration device 53 is attached to the frame member 10 so as to allow vibration to be transmitted to the step members 52.

A handle support member 60 is coupled to the frame member 10. A bar-type handle 60 is attached to the handle support member 60. In a case where a vibration source generating vibration to be transmitted to the handle 60 or grip members provided on both sides of the handle 60 (an accelerator grip 64 and a left grip (not illustrated)) is necessary, a handle vibration device 63 is attached to the handle support member 60 so as to allow vibration to be transmitted to the handle 60 or the grip members . The accelerator grip 64 as an accelerator operation member and an accelerator position sensor 65 are attached to the right end of the handle 62. The accelerator position sensor 65 outputs an electric signal indicating an opening degree of the accelerator grip 64 to the electronic control device 100. Further, a brake lever 66 as a brake operation member is attached to the right end of the handle 62 to be opposed to the accelerator grip 64, and a brake switch 67 outputting an electric signal indicating an opening /closing state of the brake lever 66 to the electronic control device 100 is attached to the right end of the handle 62. Furthermore, an ABS (Anti-Lock Braking System) unit 68 is attached to the frame member 10. In a case where a brake needs to be used as a vibration source, it suffices that brake application and non-application are continuously switched in such a manner that vibration when brake is applied is transmitted to the driver via the ABS unit 68.

A front suspension member 72 suspending a front wheel 73 is attached to the frame member 10. A vehicle speed sensor 74 is attached to the front suspension member 72, the vehicle speed sensor 74 outputting an electric signal indicating a rotation speed of the front wheel 73 as a steering wheel to the electronic control device 100. A front-wheel brake 75 that operates in accordance with a closing operation of the brake lever 66 is attached to the front wheel 73. Meanwhile, a rear suspension member 76 suspending a rear wheel 77 as a driving wheel is attached to the frame member 10. In FIG. 1, only the front-wheel brake 75 is illustrated for the sake of convenience, and illustrations of a rear-wheel brake are omitted. The brake lever 66 is a member for operating the front-wheel brake 75, and illustrations of a member for operating the rear-wheel brake are also omitted. The control target of the ABS unit 68 may include not only the front-wheel brake 75 but also the rear-wheel brake.

In addition, the forward obstacle detection device 200 is attached to the frame member 10 via a bracket (not illustrated) or the like, the forward obstacle detection device 200 being a forward situation detection device detecting a situation such as an obstacle ahead of the vehicle 1. The forward obstacle detection device 200 includes at least one of an imaging device such as a monocular or stereo camera, and a distance and direction measuring device such as a millimeter wave radar and LiDAR (Laser Imaging Detection and Ranging), and typically outputs an electric signal indicating obstacle-related information, for example, the presence of an obstacle in a driving environment ahead of the vehicle 1, a distance between the obstacle and the vehicle 1, and a direction of the obstacle from the vehicle to the electronic control device 100.

The electronic control device 100 is a control device typically configured by an ECU (Electronic Control Unit) 10 that is an arithmetic processing unit including a microcomputer or the like configured by, for example, a CPU (Central Processing Unit) on the frame member 10, and executing a control program while referring to control data, thereby controlling an operating state of the engine 20, and used as a control device that executes control that changes, for each degree of urgency in the driving environment ahead of the vehicle 1, a state of vibration of a predetermined vibration source to a state corresponding to the degree of urgency. The control program and the like are stored in a memory (not illustrated) in advance and, when being executed, are read out from the memory. The electronic control device 100 is attached to the frame member 10 via a bracket (not illustrated) or the like, as an example.

Specifically, the electronic control device 100 operates using a battery (not illustrated) mounted on the vehicle 1 as a power supply, is electrically connected to the crank angle sensor 23, the engine temperature sensor 24, the intake pressure sensor 31, the throttle position sensor 33, the accelerator position sensor 65, the brake switch 67, and the vehicle speed sensor 74, for example, and includes an engine speed calculating unit 102, an engine temperature calculating unit 104, an intake pressure calculating unit 106, a throttle opening degree calculating unit 108, an accelerator opening degree calculating unit 110, a vehicle speed calculating unit 112, an urgency-degree calculating unit 114, an urgency-degree determination unit 116, a decelerating-intention determination unit 118, and a controlling unit 150. Each of the above listed units is illustrated as a functional block when the control program is executed, and illustrations of input circuits of the respective sensors such as anA/D(Analog/Digital) conversion circuit or a waveform shaping circuit are omitted.

The engine speed calculating unit 102 calculates a speed of the engine 20 (engine speed) based on an electric signal that is output from the crank angle sensor 23, is input to the electronic control device 100, and indicates a crank angle.

The engine temperature calculating unit 104 calculates the temperature of the engine 20 (engine temperature) based on an electric signal that is output from the engine temperature sensor 24, is input to the electronic control device 100, and indicates the temperature of a coolant of the engine 20.

The intake pressure calculating unit 106 calculates an intake pressure of the engine 20 (engine intake pressure) based on an electric signal that is output from the intake pressure sensor 31, is input to the electronic control device 100, and indicates an intake pressure of the engine 20.

The throttle opening degree calculating unit 108 calculates an opening degree of the throttle valve 32 (throttle opening degree) based on an electric signal that is output from the throttle position sensor 33, is input to the electronic control device 100, and indicates an opening degree of the throttle valve 32.

The accelerator opening degree calculating unit 110 calculates an opening degree of the accelerator grip 64 (accelerator opening degree) based on an electric signal that is output from the accelerator position sensor 65, is input to the electronic control device 100, and indicates an opening degree of the accelerator grip 64.

The vehicle speed calculating unit 112 calculates a speed of the vehicle 1 (vehicle speed: an absolute value of a velocity of the vehicle) based on an electric signal that is output from the vehicle speed sensor 74, is input to the electronic control device 100, and indicates the rotation speed of the front wheel 73.

The urgency-degree calculating unit 114 calculates, based on an electric signal output from the forward obstacle detection device 200, input to the electronic control device 100, and indicating information related to an obstacle ahead of the vehicle 1, a distance between the obstacle and the vehicle 1 (obstacle distance) and also calculates, based on the obstacle distance calculated in this manner and the vehicle speed calculated by the vehicle speed calculating unit 112, a value of urgency degree that numerically expresses urgency exhibited by the obstacle ahead of the vehicle 1 with respect to the vehicle 1. Specifically, the urgency-degree calculating unit 114 calculates a value obtained by dividing the obstacle distance by the vehicle speed as the value of urgency degree. The urgency-degree calculating unit 114 may calculate a value obtained by dividing the obstacle distance by a relative vehicle speed between the obstacle and the vehicle 1 (an absolute value of the relative velocity) as the value of urgency degree. The relative vehicle speed between the obstacle and the vehicle 1 can be calculated based on the electric signal output from the forward obstacle detection device 200, input to the electronic control device 100, and indicating information related to the obstacle ahead of the vehicle 1 and the vehicle speed calculated by the vehicle speed calculating unit 112.

The urgency-degree determination unit 116 determines which degree the urgency degree of the vehicle 1 corresponds to in terms of the relation with the obstacle ahead of the vehicle 1, that is, the degree of urgency (urgency degree) based on the value of urgency degree calculated by the urgency-degree calculating unit 114. Specifically, the urgency-degree determination unit 116 determines the urgency degree as a low urgency degree indicating that the degree of urgency is low, when the value of urgency degree falls within a predetermined range indicating relatively larger values, and determines the urgency degree as a high urgency degree indicating that the degree of urgency is high, when the value of urgency degree falls within a predetermined range indicating relatively smaller values. Urgency degrees may be classified more finely between the low urgency degree and the high urgency degree in such a manner that, when the value of urgency degree falls within a predetermined range indicating relatively intermediate values, the urgency-degree determination unit 116 determines the urgency degree as an intermediate urgency degree indicating that the degree of urgency is at an intermediate level. Further, the urgency-degree determination unit 116 can determine that there is substantially no urgency (zero degree), when the value of urgency degree is a value equal to or larger than a predetermined maximum value and the urgency degree deviates to the further lower urgency degree side of the low urgency degree. As for numerical ranges respectively defining the predetermined range indicating relatively larger value of urgency degrees, the predetermined range indicating relatively smaller value of urgency degrees, and the predetermined range indicating relatively intermediate value of urgency degrees, for example, data of the respective predetermined ranges stored in a memory in advance as control data or the like is read out and used. The determination result obtained by the urgency-degree determination unit 116 is not limited to a result indicated by the urgency degree described above, and it suffices that the determination result can define the level of urgency.

The decelerating-intention determination unit 118 determines that the driver of the vehicle 1 has an intention to decelerate, when the throttle opening degree calculated by the throttle opening degree calculating unit 108 has decreased to a predetermined opening degree or less, and determines that the driver of the vehicle 1 has no intention to decelerate, when the throttle opening degree is maintained above the predetermined opening degree. Alternatively, the decelerating-intention determination unit 118 determines that the driver of the vehicle 1 has an intention to decelerate, when an electric signal output from the brake switch 67, input to the electronic control device 100, and indicating the opening/closing state of the brake lever 66 indicates that the brake lever 66 has been switched from the opening state to the closing state, and determines that the driver of the vehicle 1 has no intention to decelerate, when the electric signal indicates that the brake lever 66 is maintained in the opening state. The determination whether the driver of the vehicle 1 has an intention to decelerate may be made by using both the magnitude of the throttle opening degree and the opening/closing state of the brake lever 66. The presence or absence of the intention to decelerate of the driver of the vehicle 1 may be determined also considering the operating state of an operation member that operates a rear-wheel brake together with or separately from the front-wheel brake 75, although its usage frequency tends to be relatively low in a case of a saddle type vehicle, for example.

The controlling unit 150 controls the operating state of the engine 20 based on a necessary item among the engine speed calculated by the engine speed calculating unit 102, the engine temperature calculated by the engine temperature calculating unit 104, the engine intake pressure calculated by the intake pressure calculating unit 106, the throttle opening degree calculated by the throttle opening degree calculating unit 108, the accelerator opening degree calculated by the accelerator opening degree calculating unit 110, and the vehicle speed calculated by the vehicle speed calculating unit 112; executes control that causes the operating state of the engine 20 to return from a reduced operating state where the output of the engine 20 is reduced to a normal operating state where the output is not reduced in accordance with the urgency degree determined by the urgency-degree determination unit 116, thereby changing a state of vibration of the engine 20 to a state corresponding to the degree of urgency; and prohibits execution of control that changes the state of vibration of the engine 20 to the state corresponding to the degree of urgency in accordance with the intention to decelerate determined by the decelerating-intention determination unit 118.

The controlling unit 150 includes a fuel injection amount calculating unit 152, an ignition timing calculating unit 154, a target throttle opening degree calculating unit 156, a fuel injection amount changing unit 162, an ignition timing changing unit 164, and a target throttle opening degree changing unit 166 as functional blocks, respectively. The target throttle opening degree calculating unit 156 and the target throttle opening degree changing unit 166 are necessary in a case where the throttle valve 32 is driven by the throttle motor 34 and an actual throttle opening degree is subjected to feed-back control.

The fuel injection amount calculating unit 152 calculates the injection amount of a fuel injected from the fuel injection valve 36 based on characteristic values defining the operating state of the engine 20. As an example, the fuel injection amount calculating unit 152 calculates a basic fuel injection amount based on the engine speed calculated by the engine speed calculating unit 102 and the throttle opening degree calculated by the throttle opening degree calculating unit 108, and corrects the basic fuel injection amount based on the engine temperature calculated by the engine temperature calculating unit 104, the engine intake pressure calculated by the intake pressure calculating unit 106, and the like to calculate the injection amount of the fuel injected from the fuel injection valve 36.

The ignition timing calculating unit 154 calculates an ignition timing at which the spark plug 28 ignites based on characteristic values defining the operating state of the engine 20. As an example, the ignition timing calculating unit 154 calculates a basic ignition timing based on the engine speed calculated by the engine speed calculating unit 102 and the throttle opening degree calculated by the throttle opening degree calculating unit 108, and corrects the basic ignition timing based on the engine temperature calculated by the engine temperature calculating unit 104, the engine intake pressure calculated by the intake pressure calculating unit 106, and the like to calculate the ignition timing at which the spark plug 28 ignites.

The target throttle opening degree calculating unit 156 calculates a throttle opening degree as a target opening degree (target throttle opening degree) of feedback control causing the actual throttle opening degree of the throttle valve 32 to follow, based on the accelerator opening degree calculated by the accelerator opening degree calculating unit 110.

The fuel injection amount changing unit 162 changes the fuel injection amount calculated by the fuel injection amount calculating unit 152 to calculate a changed fuel injection amount. Specifically, the fuel injection amount changing unit 162 calculates the changed fuel injection amount obtained by reducing the fuel injection amount calculated by the fuel injection amount calculating unit 152. The fuel injection amount changing unit 162 may calculate the changed fuel injection amount obtained by reducing the fuel injection amount calculated by the fuel injection amount calculating unit 152 more as the urgency degree determined by the urgency-degree determination unit 116 is higher.

The ignition timing changing unit 164 changes the ignition timing calculated by the ignition timing calculating unit 154 to calculate a changed ignition timing. Specifically, the ignition timing changing unit 164 calculates the changed ignition timing obtained by retarding the ignition timing calculated by the ignition timing calculating unit 154. The ignition timing changing unit 164 may calculate the changed fuel injection amount obtained by retarding the ignition timing calculated by the ignition timing calculating unit 154 more as the urgency degree determined by the urgency-degree determination unit 116 is higher.

The target throttle opening degree changing unit 166 changes the target throttle opening degree calculated by the target throttle opening degree calculating unit 156 to calculate a changed target throttle opening degree. Specifically, the target throttle opening degree changing unit 166 calculates the changed target throttle opening degree obtained by reducing the target throttle opening degree calculated by the target throttle opening degree calculating unit 156. The target throttle opening degree changing unit 166 may calculate the changed target throttle opening degree obtained by reducing the target throttle opening degree calculated by the target throttle opening degree calculating unit 156 more as the urgency degree determined by the urgency-degree determination unit 116 is higher.

The controlling unit 150 executes control that causes the operating state of the engine 20 to return from the reduced operating state where the output of the engine 20 is reduced to the normal operating state where the output is not reduced in accordance with the urgency degree determined by the urgency-degree determination unit 116, thereby changing the state of vibration of the engine 20 to the state corresponding to the degree of urgency, and prohibits execution of this control that changes the state of vibration of the engine 20 to the state corresponding to the degree of urgency in accordance with the intention to decelerate determined by the decelerating-intention determination unit 118. When the urgency degree determined by the urgency-degree determination unit 116 is the zero degree, the controlling unit 150 does not perform reduction itself of the output of the engine 20, and the engine 20 is operated in the normal operating state.

In more detail, the controlling unit 150 increases an occurrence frequency of a combustion cycle in which the output of the engine 20 is reduced and a frequency of the return from the combustion cycle in which the output of the engine 20 is reduced to a combustion cycle in which the output of the engine 20 is not reduced, as the urgency degree determined by the urgency-degree determination unit 116 becomes higher, and causes the operating state of the engine 20 to return from the reduced operating state in which the output is reduced to the normal operating state in which the output is not reduced, thereby increasing an occurrence frequency of a change in a state of vibration experienced by the driver of the vehicle **1.** In other words, as the urgency degree determined by the urgency-degree determination unit 116 becomes higher, the controlling unit 150 makes a period of the return from the combustion cycle in which the output of the engine 20 is reduced to the combustion cycle in which the output of the engine 20 is not reduced shorter, and makes an occurrence period of the change in the state of vibration experienced by the driver of the vehicle 1 shorter. In order for the controlling unit 150 to reduce the output of the engine 20, it suffices to control the injection amount of the fuel injected from the fuel injection valve 36, the ignition timing at which the spark plug 28 ignites, and the actual throttle opening degree of the throttle valve 32 correspondingly by using any of the changed fuel injection amount calculated by the fuel injection amount changing unit 162, the changed ignition timing calculated by the ignition timing changing unit 164, and the changed target throttle opening degree calculated by the target throttle opening degree changing unit 166 alone or using a part or all of them in combination. Meanwhile, in order for the controlling unit 150 to cause the reduced output of the engine 20 to return, it suffices to correspondingly control the injection amount of the fuel injected from the fuel injection valve 36, the ignition timing at which the spark plug 28 ignites, and the actual throttle opening degree of the throttle valve 32 correspondingly by using the fuel injection amount calculated by the fuel injection amount calculating unit 152, the ignition timing calculated by the ignition timing calculating unit 154, and the target throttle opening degree calculated by the target throttle opening degree calculating unit 156, in place of the changed fuel injection amount calcul at ed by the fuel injection amount changing unit 162, the changed ignition timing calculated by the ignition timing changing unit 164, and the changed target throttle opening degree calculated by the target throttle opening degree changing unit 166. Further, in order for the controlling unit 150 to reduce the output of the engine 20 more, any of the changed fuel injection amount that is more reduced, the changed ignition timing that is more retarded, and the changed target throttle opening degree that is more reduced may be used alone, or a part or all of them may be used in combination. Furthermore, in order for the controlling unit 150 to further reduce the output of the engine 20, any of prohibition of fuel injection itself by the fuel injection valve 36, prohibition of ignition itself of the spark plug 28, and prohibition of rotation of the throttle valve 32 from the rotaion position corresponding to full closing thereof in the throttle motor 34 may be applied alone, or a part or all of them may be applied in combination. In addition, by increasing the occurrence frequency of the combustion cycle in which the output of the engine 20 is reduced as the urgency degree determined by the urgency-degree determination unit 116 becomes higher, that is, by making the occurrence period of the combustion cycle in which the output of the engine 20 is reduced shorter as the urgency degree determined by the urgency-degree determination unit 116 becomes higher, the vehicle speed is reduced more.

Meanwhile, when the decelerating-intention determination unit 118 determines that the driver of the vehicle 1 has an intention to decelerate, the controlling unit 150 prohibits execution of control itself that changes the state of vibration of the engine 20 to the state corresponding to the degree of urgency by causing the operating state of the engine 20 to return from the reduced operating state where the output is reduced to the normal operating state where the output is not reduced.

In a case where the vibration source is an electric motor 20' illustrated with an imaginary line in FIG. 1, the controlling unit 150 can change the state of vibration experienced by the driver of the vehicle 1 by controlling the output via a driving inverter (not illustrated) or the like in a motor stage chronologically corresponding to the combustion cycle in which the output is reduced in the engine 20 and the combustion cycle in which the output is not reduced. In this case, by causing the operating state to return from the reduced operating state where the output of the electric motor 20' is reduced to the normal operating state where the output is not reduced, the state of vibration of the electric motor 20' can be changed to the state corresponding to the degree of urgency, and the vehicle speed is reduced in the reduced operating state. Further, in a case where the vibration source is a brake (e.g., the front-wheel brake 75), the controlling unit 150 activates the ABS unit 68 at a timing and a time length that correspond to the combustion cycle in which the output is not reduced in the engine 20, thereby being able to apply so-called pumping brake in which the strength of the breaking force alternately changes in a short time to change the state of vibration experienced by the driver of the vehicle 1. In this case, by causing the ABS unit 68 to return from a not-activated state to an activated state, the state of vibration of the brake such as the front-wheel brake 75 can be changed to the state corresponding to the degree of urgency, and the vehicle speed is reduced when the ABS unit 68 is activated. Furthermore, in a case where the vibration source is any of the seat vibration device 51, the step vibration device 53, and the handle vibration device 63, the controlling unit 150 activates that vibration device at a timing and a time length that correspond to the combustion cycle in which the output is not reduced in the engine 20, thereby being able to generate vibration and change the state of vibration experienced by the driver of the vehicle 1. In this case, it is impossible to reduce the vehicle speed directly. However, by changing the state of vibration generated by the vibration devices 51, 53, and 63 to the state corresponding to the degree of urgency, the driver can understand that the urgency degree is increasing and can return the accelerator grip 64 to the closing direction or grip the brake lever 66 to be closed. Thus, indirect reduction of the vehicle speed can be prompted.

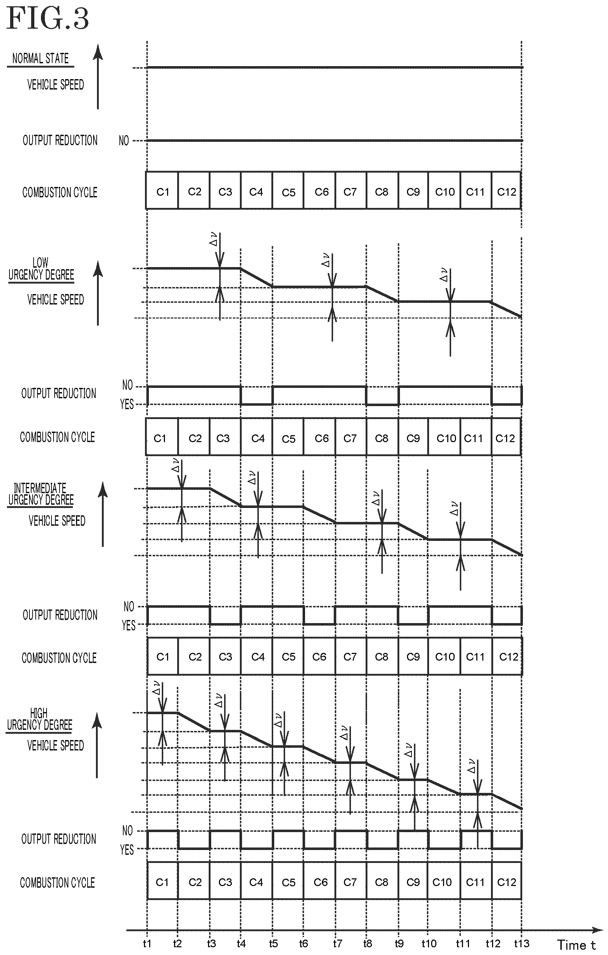

An operation example of the vehicle control system S having the configuration described above when the system S executes control that causes the operating state of the engine 20 to return from the reduced operating state where the output is reduced to the normal operating state where the output is not reduced in accordance with the urgency degree determined by the urgency-degree determination unit 116, thereby changing the state of vibration of the engine 20 to the state corresponding to the degree of urgency is described in detail below, further with reference to FIG. 3. In this example, it is assumed that the electronic control device 100 is configured to control the operating state of the engine 20 by controlling the fuel injection amount, the ignition timing, and the throttle opening degree of the engine 20 for the sake of convenience.

### [Operation of vehicle control system]

FIG. 3 is a timing chart illustrating chronological changes in an engine output and a vehicle speed when the vehicle control system S according to the present embodiment executes control that changes, for each degree of urgency, for each degree of urgency, a state of vibration of an engine to a state corresponding to the degree of urgency, as an example. This control starts at a timing at which an ignition switch (not illustrated) of the vehicle 1 is turned on and the electronic control device 100 is activated, and is executed during a time period during which the electronic control device 100 is activated. In the drawing, a case where the urgency-degree determination unit 116 determines the urgency degree as the zero degree, a case where the urgency-degree determination unit 116 determines the urgency degree as the low urgency degree, a case where the urgency-degree determination unit 116 determines the urgency degree as the intermediate urgency degree, and a case where the urgency-degree determination unit 116 determines the urgency degree as the high urgency degree are illustrated from top to bottom on the same time scale for the sake of convenience. However, the drawing can be understood as illustrating, when an obstacle is detected ahead of the vehicle 1, states from a state before detection to a state where the vehicle approaches the obstacle are illustrated in turn from top to bottom.

First, as illustrated in the uppermost chart in FIG. 3, when the urgency-degree determination unit 116 determines the urgency degree as the zero urgency degree, the fuel injection amount calculating unit 152, the ignition timing calculating unit 154, and the target throttle opening degree calculating unit 156 calculate a fuel injection amount, an ignition timing, and a target throttle opening degree, respectively, and the fuel injection amount changing unit 162, the ignition timing changing unit 164, and the target throttle opening degree changing unit 166 do not change the fuel injection amount, the ignition timing, and the target throttle opening degree calculated in this manner. That is, the controlling unit 150 causes the engine 20 to operate in an operating state at normal times by using a normal fuel injection amount, a normal ignition timing, and a normal target throttle opening degree. Consequently, the controlling unit 150 does not change a state of vibration from a state of vibration in the operating state at normal times of the engine 20. As also for vehicle speed, the controlling unit 150 does not reduce the vehicle speed corresponding to the output in the operating state at normal times of the engine 20. When the decelerating-intention determination unit 118 determines that the driver of the vehicle 1 has an intention to decelerate while the controlling unit 150 executes control that changes, for each degree of urgency, the state of vibration of the engine to the state corresponding to the degree of urgency, the controlling unit 150 prohibits continuous execution of this control. Therefore, the operating state of the engine 20 after the prohibition becomes the operating state at normal times and, in association therewith, exhibits the chronological change illustrated in the uppermost chart in FIG. 3.

As illustrated in the second chart from the top in FIG. 3, when the urgency-degree determination unit 116 determines the urgency degree as the low urgency degree, the fuel injection amount calculating unit 152, the ignition timing calculating unit 154, and the target throttle opening degree calculating unit 156 calculate the fuel injection amount, the ignition timing, and the target throttle opening degree that are the same as those at normal times, respectively, and the fuel injection amount changing unit 162, the ignition timing changing unit 164, and the target throttle opening degree changing unit 166 do not change the fuel injection amount, the ignition timing, and the target throttle opening degree calculated in this manner in combustion cycles C1 to C3 from a time t1 to a time t4, combustion cycles C5 to C7 from a time t5 to a time t8, and combustion cycles C9 to C11 from a time t9 to a time t12. Meanwhile, in a combustion cycle C4 from the time t4 to the time t5, a combustion cycle C8 from the time t8 to the time t9, and a combustion cycle C12 from the time t12 to a time t13, the fuel injection amount calculating unit 152, the ignition timing calculating unit 154, and the target throttle opening degree calculating unit 156 calculate the fuel injection amount, the ignition timing, and the target throttle opening degree that are the same as those at normal times, respectively, and the fuel injection amount changing unit 162, the ignition timing changing unit 164, and the target throttle opening degree changing unit 166 change the fuel injection amount, the ignition timing, and the target throttle opening degree calculated in this manner to calculate a changed fuel injection amount, a changed ignition timing, and a changed target throttle opening degree, respectively. That is, every time three combustion cycles in which a normal operation is performed and the output is not reduced are performed, the controlling unit 150 reduces the output in one combustion cycle, and realizes the operating state of the engine 20 which returns from that one combustion cycle to the following combustion cycle in which the normal operation is performed and the output is not reduced. Accordingly, the state of vibration is changed every return from the combustion cycle in which the output is reduced to the combustion cycle in which the normal operation is performed and the output is not reduced, and the vehicle speed is reduced in each combustion cycle in which the output is reduced. That is, in accordance with the low degree of urgency, the controlling unit 150 repeats execution of control that realizes return from a state in which the operating state when the output of the engine 20 is reduced is exhibited to reduce the vehicle speed to a state in which the operating state of the engine 20 at normal times is exhibited to change the vibration state relatively largely. Further, in a time period from the time t1 to the time t13, the vehicle speed is reduced by 3Δv (three times Δv).

As illustrated in the third chart from the top in FIG. 3, when the urgency-degree determination unit 116 determines the urgency degree as the intermediate urgency degree, the fuel injection amount calculating unit 152, the ignition timing calculating unit 154, and the target throttle opening degree calculating unit 156 calculate the fuel injection amount, the ignition timing, and the target throttle opening degree that are the same as those at normal times, respectively, and the fuel injection amount changing unit 162, the ignition timing changing unit 164, and the target throttle opening degree changing unit 166 do not change the fuel injection amount, the ignition timing, and the target throttle opening degree calculated in this manner in the combustion cycle C1 to a combustion cycle C2 from the time t1 to a time t3, the combustion cycles C4 to C5 from the time t4 to a time t6, the combustion cycles C7 to C8 from a time t7 to the time t9, and a combustion cycle C10 to the combustion cycle C11 from a time t10 to the time t12. Meanwhile, in the combustion cycle C3 from the time t3 to the time t4, a combustion cycle C6 from the time t6 to the time t7, the combustion cycle C9 from the time t9 to the time t10, and the combustion cycle C12 from the time t12 to the time t13, the fuel injection amount calculating unit 152, the ignition timing calculating unit 154, and the target throttle opening degree calculating unit 156 calculate the fuel injection amount, the ignition timing, and the target throttle opening degree that are the same as those at normal times, respectively, and the fuel injection amount changing unit 162, the ignition timing changing unit 164, and the target throttle opening degree changing unit 166 change the fuel injection amount, the ignition timing, and the target throttle opening degree calculated in this manner to calculate the changed fuel injection amount, the changed ignition timing, and the changed target throttle opening degree, respectively. That is, every time two combustion cycles in which the normal operation is performed and the output is not reduced are performed, the controlling unit 150 reduces the output in one combustion cycle, and realizes the operating state of the engine 20 which returns from that one combustion cycle to the following combustion cycle in which the normal operation is performed and the output is not reduced. Accordingly, also for the intermediate urgency degree, the state of vibration is changed every return from the combustion cycle in which the output is reduced to the combustion cycle in which the normal operation is performed and the output is not reduced, and the vehicle speed is reduced in each combustion cycle in which the output is reduced. In more detail, in accordance with the intermediate urgency degree, the controlling unit 150 repeats execution of control that realizes return from the state in which the operating state of the engine 20 when the output is reduced is exhibited to reduce the vehicle speed to the state in which the operating state of the engine 20 at normal times is exhibited to change the vibration state relatively largely. As compared with a case of the low urgency degree, an occurrence frequency of switching from the operating state when the output of the engine 20 is reduced to the operating state at normal times increases, an occurrence period of such switching becomes shorter, and the vehicle speed is reduced by 6Δv (six times Δv) in total in the time period from the time t1 to the time t13.

As illustrated in the lowermost chart in FIG. 3, when the urgency-degree determination unit 116 determines the urgency degree as the high urgency degree, the fuel injection amount calculating unit 152, the ignition timing calculating unit 154, and the target throttle opening degree calculating unit 156 calculate the fuel injection amount, the ignition timing, and the target throttle opening degree that are the same as those at normal times, respectively, and the fuel injection amount changing unit 162, the ignition timing changing unit 164, and the target throttle opening degree changing unit 166 do not change the fuel injection amount, the ignition timing, and the target throttle opening degree calculated in this manner in the combustion cycle C1 from the time t1 to a time t2, the combustion cycle C3 from the time t3 to the time t4, the combustion cycle C5 from the time t5 to the time t6, the combustion cycle C7 from the time t7 to the time t8, the combustion cycle C9 from the time t9 to the time t10, and the combustion cycle C11 from a time t11 to the time t12. Meanwhile, in the combustion cycle C2 from the time t2 to the time t3, the combustion cycle C4 from the time t4 to the time t5, the combustion cycle C6 from the time t6 to the time t7, the combustion cycle C8 from the time t8 to the time t9, the combustion cycle C10 from the time t10 to the time t11, and the combustion cycle C12 from the time t12 to the time t13, the fuel injection amount calculating unit 152, the ignition timing calculating unit 154, and the target throttle opening degree calculating unit 156 calculate the fuel injection amount, the ignition timing, and the target throttle opening degree that are the same as those at normal times, respectively, and the fuel injection amount changing unit 162, the ignition timing changing unit 164, and the target throttle opening degree changing unit 166 change the fuel injection amount, the ignition timing, and the target throttle opening degree calculated in this manner to calculate the changed fuel injection amount, the changed ignition timing, and the changed target throttle opening degree, respectively. That is, every time one combustion cycle in which the normal operation is performed and the output is not reduced is performed, the controlling unit 150 reduces the output in one combustion cycle and realizes the operating state of the engine 20 which returns from that one combustion cycle to the following combustion cycle in which the normal operation is performed and the output is not reduced. Accordingly, also for the high urgency degree, the state of vibration is changed every return from the combustion cycle in which the output is reduced to the combustion cycle in which the normal operation is performed and the output is not reduced, and the vehicle speed is reduced in each combustion cycle in which the output is reduced. In more detail, in accordance with the high urgency degree, the controlling unit 150 repeats execution of control that realizes return from the state in which the operating state when the output of the engine 20 is reduced is exhibited to reduce the vehicle speed to the state in which the operating state of the engine 20 at normal times is exhibited to change the state of vibration relatively largely. As compared with a case of the intermediate urgency degree, the occurrence frequency of switching from the operating state when the output of the engine 20 is reduced to the operating state at normal times increases, the occurrence period of such switching becomes shorter, and the vehicle speed is reduced by 6Δv (six times Δv) in total in the time period from the time t1 to the time t13.

In order to notify the driver of the vehicle 1 of an occurrence of a change in the state of vibration more clearly, it is preferable to adjust the occurrence frequency of the combustion cycle in which the output of the engine 20 is reduced in accordance with the engine speed in such a manner that, when the urgency degree is the same, the occurrence frequency is the same for any engine speed (typically, an engine speed range of which the lower limit is an idling engine speed and the upper limit is an allowable upper-limit engine speed).

In this case, assuming that reduction of the output of the engine 20 is performed once every 200 ms when the urgency degree is high, for example, it suffices to reduce the output in one combustion cycle every ten combustion cycles when the engine speed is 6000 rpm and in one combustion cycle every two combustion cycles when the engine speed is 1200 rpm.

As is apparent from the above descriptions, the vehicle control system S according to the present embodiment includes the forward situation detection device 200 configured to detect a situation ahead of the vehicle 1, the vibration source 20 configured to generate vibration to be transmitted to a driver of the vehicle 1, and the controlling unit 150 configured to execute, for each degree of urgency obtained by using information detected by the forward situation detection device 200, control of changing a state of vibration of the vibration source 20, 20', 51, 53, 63, or 75 to a state corresponding to the degree of urgency. Accordingly, it is possible to, for each degree of urgency obtained based on detection information of the situation ahead of the vehicle 1, warn the driver of the degree of urgency gradually to prompt an emergency avoidance operation of the vehicle 1 and contribute to gradual deceleration of the vehicle 1. Accordingly, even in a case of the vehicle 1 being lightweight such as a saddle type vehicle, it is possible to decelerate the vehicle in a mode in which the stability thereof is not impaired while preventing the driver from panicking.

Further, in the vehicle control system S according to the present embodiment, the vibration source 20, 20', 51, 53, 63, or 75 is at least one of a group consisting of the engine 20 that is a driving source of the vehicle 1, the electric motor 20' that is the driving source, the brake 75 of the vehicle 1, the vibration device 63 that causes the handle 62 of the vehicle 1 to vibrate, the vibration device 51 that causes the seat 50 of the vehicle 1 to vibrate, and the vibration device 53 that causes the step 52 of the vehicle 1 to vibrate. Therefore, by using an existing mounted part of the vehicle 1 or adding and using a component that does not have an excessive influence in terms of weight, size, cost, and the like, it is possible to, for each degree of urgency, warn the driver of the degree of urgency gradually to prompt the emergency avoidance operation of the vehicle 1 and contribute to gradual deceleration of the vehicle 1.

Further, in the vehicle control system S according to the present embodiment, the controlling unit 150 changes a return period of return from a reduced operating state in which an output of the driving source 20 or 20' is reduced to a normal operating state in which the output is not reduced, in accordance with the degree of urgency, thereby changing the state of vibration of the driving source 20 or 20' to the state corresponding to the degree of urgency. Therefore, when the return from the reduced operating state to the normal operating state is made and the state of vibration is changed, it is possible to apply accelerating driving force to the vehicle 1 to move the dynamic center of gravity of the vehicle 1 to the driving wheel 77 side, i.e., toward the rear, not to the steering wheel 73 side. Accordingly, even in a case of the vehicle 1 being lightweight such as a saddle type vehicle, it is possible to warn the driver of the degree of urgency gradually in accordance with the degree of urgency in a mode in which the stability thereof is not impaired to prompt the emergency avoidance operation of the vehicle and is also possible to perform gradual deceleration of the vehicle more reliably.

Further, in the vehicle control system S according to the present embodiment, the controlling unit 150 makes the return period shorter as the degree of urgency becomes higher, thereby making a change period at which the state of vibration of the driving source 20 or 20' is changed to the state corresponding to the degree of urgency shorter. Therefore, it is possible to warn the driver of the degree of urgency more clearly in accordance with the degree of urgency.

Further, in the vehicle control system S according to the present embodiment, the controlling unit 150 makes a length of time during which the reduced operating state is exhibited longer as the degree of urgency becomes higher. Therefore, it is possible to perform gradual deceleration of the vehicle 1 more reliably in accordance with the degree of urgency.

Further, in the vehicle control system S according to the present embodiment, the controlling unit 150 reduces an output of the engine 20 to place the engine 20 in the reduced operating state by reducing the amount of a fuel supply to the engine 20 or prohibiting the fuel supply. Therefore, it is possible to realize the reduced operating state of the engine 20 more reliably in a mode in which unnecessary influences on the exhaust gas characteristics are reduced.

Further, in the vehicle control system S according to the present embodiment, the controlling unit 150 reduces an output of the engine 20 to place the engine 20 in the reduced operating state by retarding a timing of ignition of the engine 20 or prohibiting the ignition. Therefore, it is possible to realize the reduced operating state of the engine 20 more reliably.

Further, in the vehicle control system S according to the present embodiment, the controlling unit 150 reduces an output of the engine 20 to place the engine 20 in the reduced operating state by reducing the opening degree of the throttle valve 32 of the engine 20 or setting the opening degree to full closing degree. Therefore, it is possible to realize the reduced operating state of the engine 20 more reliably in a mode in which unnecessary influences on the exhaust gas characteristics are reduced.

Further, in the vehicle control system S according to the present embodiment, when the driver has an intention to decelerate, the controlling unit 150 prohibits execution of control that changes, for each degree of urgency, the state of vibration of the vibration source 20, 20', 51, 53, 63, or 75 to the state corresponding to the degree of urgency. Therefore, it is possible to prioritize the driver's intention to decelerate, and allow the driver himself to perform the emergency avoidance operation of the vehicle 1 and to decelerate the vehicle 1.

In the present invention, the types, shapes, arrangements, numbers, and the like of constituent elements are not limited to those described in the above embodiment, and it is needless to mention that changes can be appropriately made without departing from the scope of the invention as defined by the appended claims, such as appropriately replacing these constituent elements with other members having equivalent operational effects.

### INDUSTRIAL APPLICABILITY

As described above, the present invention can provide a vehicle control system that can obtain the degree of urgency based on detection information of a situation ahead of a vehicle, warn a driver of the degree of urgency gradually, prompt an emergency avoidance operation of the vehicle, and contribute to prompt of gradual deceleration of the vehicle. Therefore, because of its general purposes and universal characteristics, applications of the present invention can be expected in a wide range in a vehicle control system of two-wheeled automobile, four-wheeled automobile, and the like.

### REFERENCE SIGNS LIST

- S: vehicle control system
- 1: vehicle
- 10: frame member
- 20: engine
- 20': electric motor
- 22: crankshaft
- 23: crank angle sensor
- 24: engine temperature sensor
- 26: head
- 28: spark plug
- 30: intake pipe
- 31: intake pressure sensor
- 32: throttle valve
- 33: throttle motor
- 34: throttle motor
- 36: fuel injection valve
- 40: storage member
- 50: seat
- 51: seat vibration device
- 52: step member
- 53: step vibration device
- 60: handle support member
- 62: handle
- 63: handle vibration device
- 64: accelerator grip
- 65: accelerator position sensor
- 66: brake lever
- 67: brake switch
- 68: ABS unit
- 72: front suspension member
- 73: front wheel
- 74: vehicle speed sensor
- 75: front-wheel brake
- 76: rear suspension member
- 77: rear wheel
- 100: electronic control device
- 102: engine speed calculating unit
- 104: engine temperature calculating unit
- 106: intake pressure calculating unit
- 108: throttle opening degree calculating unit
- 110: accelerator opening degree calculating unit
- 112: vehicle speed calculating unit
- 114: urgency-degree calculating unit
- 116: urgency-degree determination unit
- 118: decelerating-intention determination unit
- 150: controlling unit
- 152: fuel injection amount calculating unit
- 154: ignition timing calculating unit
- 156: target throttle opening degree calculating unit
- 162: fuel injection amount changing unit
- 164: ignition timing changing unit
- 166: target throttle opening degree changing unit
- 200: forward obstacle detection device

## Claims

1. A vehicle control system mountable on a vehicle, comprising:
a forward situation detection device (200) configured to detect a situation ahead of the vehicle;
a vibration source (20, 20', 75, 63, 51, 53) configured to generate vibration tc be transmitted to a driver of the vehicle; and
a controlling unit (150) configured to, for each degree of urgency obtained by using information detected by the forward situation detection device, execute control of changing a state of the vibration of the vibration source to a state corresponding to the degree of the urgency,
wherein the vibration source is at least one of a group consisting of an engine that is a driving source of the vehicle, an electric motor that is the driving source, a brake of the vehicle, a vibration device causing a handle of the vehicle to vibrate, a vibration device causing a seat of the vehicle to vibrate, and a vibration device causing a step of the vehicle to vibrate
**characterised in that**
in the control, the controlling unit changes a return period of return from a reduced operating state in which an output of the driving source is reduced to a normal operating state in which the output is not reduced in accordance with the degree of the urgency, to change the state of the vibration of the driving source to the state corresponding to the degree of the urgency.

2. The vehicle control system according to claim 1, wherein in the control, the controlling unit makes the return period shorter as the degree of the urgency becomes higher, to make a change period at which the state of the vibration of the driving source is changed to the state corresponding to the degree of the urgency shorter.

3. The vehicle control system according to claim 2, wherein in the control, the controlling unit makes a length of time during which the reduced operating state is exhibited longer as the degree of the urgency becomes higher.

4. The vehicle control system according to claim 1, wherein in the control, the controlling unit reduces an output of the engine to place the engine in the reduced operating state by reducing an amount of a fuel supply to the engine or prohibiting the fuel supply.

5. The vehicle control system according to claim 1, wherein in the control, the controlling unit reduces an output of the engine to place the engine in the reduced operating state by retarding a timing of ignition of the engine or prohibiting the ignition.

6. The vehicle control system according to claim 1, wherein in the control, the controlling unit reduces an output of the engine to place the engine in the reduced operating state by reducing an opening degree of a throttle valve of the engine or setting the opening degree to full closing degree.

7. The vehicle control system according to claim 1, wherein, when the driver has an intention to decelerate, the controlling unit prohibits execution of the control.

## Patentansprüche

1. Fahrzeugsteuerungssystem, das an einem Fahrzeug montierbar ist, umfassend:
eine Vorrichtung zur Erfassung einer Situation im Vorausbereich (200), die zum Erfassen einer Situation vor dem Fahrzeug ausgebildet ist;
eine Schwingungsquelle (20, 20', 75, 63, 51, 53), die zum Erzeugen einer Schwingung ausgebildet ist, die zu einem Fahrer des Fahrzeugs übertragen werden soll; und
eine Steuerungseinheit (150), die ausgebildet ist, für jeden Dringlichkeitsgrad, der unter Verwendung von Informationen erhalten wird, die durch die Vorrichtung zur Erfassung einer Situation im Vorausbereich erfasst werden, eine Steuerung des Änderns eines Zustands der Schwingung der Schwingungsquelle zu einem Zustand auszuführen, der dem Dringlichkeitsgrad entspricht,
wobei die Schwingungsquelle mindestens eine einer Gruppe ist, die aus einem Motor, der eine Antriebsquelle des Fahrzeugs ist, einem Elektromotor, der die Antriebsquelle ist, einer Bremse des Fahrzeugs, einer Schwingungsvorrichtung, die bewirkt, dass ein Griff des Fahrzeugs schwingt, einer Schwingungsvorrichtung, die bewirkt, dass ein Sitz des Fahrzeugs schwingt, und einer Schwingungsvorrichtung, die bewirkt, dass ein Trittbrett des Fahrzeugs schwingt, besteht, **dadurch gekennzeichnet, dass**
bei der Steuerung die Steuerungseinheit einen Rückkehrzeitraum der Rückkehr von einem reduzierten Betriebszustand, in dem eine Leistungsabgabe der Antriebsquelle reduziert ist, zu einem normalen Betriebszustand, in dem die Leistungsabgabe nicht reduziert ist, gemäß dem Dringlichkeitsgrad ändert, um den Zustand der Schwingung der Antriebsquelle zu dem Zustand zu ändern, der dem Dringlichkeitsgrad entspricht.

2. Fahrzeugsteuerungssystem nach Anspruch 1, wobei bei der Steuerung die Steuerungseinheit den Rückkehrzeitraum kürzer macht, wenn der Dringlichkeitsgrad höher wird, so dass ein Änderungszeitraum, bei dem der Zustand der Schwingung der Antriebsquelle zu dem Zustand geändert ist, der dem Dringlichkeitsgrad entspricht, kürzer gemacht wird.

3. Fahrzeugsteuerungssystem nach Anspruch 2, wobei bei der Steuerung die Steuerungseinheit eine Zeitdauer, während der der reduzierte Betriebszustand vorliegt, länger macht, wenn der Dringlichkeitsgrad höher wird.

4. Fahrzeugsteuerungssystem nach Anspruch 1, wobei bei der Steuerung die Steuerungseinheit eine Leistungsabgabe des Motors reduziert, so dass der Motor durch Reduzieren eines Ausmaßes einer Kraftstoffzufuhr zu dem Motor oder Verhindern der Kraftstoffzufuhr in den reduzierten Betriebszustand versetzt wird.

5. Fahrzeugsteuerungssystem nach Anspruch 1, wobei bei der Steuerung die Steuerungseinheit eine Leistungsabgabe des Motors reduziert, so dass der Motor durch Verzögern eines Zündzeitpunkts des Motors oder Verhindern der Zündung in den reduzierten Betriebszustand versetzt wird.

6. Fahrzeugsteuerungssystem nach Anspruch 1, wobei bei der Steuerung die Steuerungseinheit eine Leistungsabgabe des Motors reduziert, so dass der Motor durch Reduzieren eines Öffnungsgrads einer Drosselklappe des Motors oder Einstellen des Öffnungsgrads auf einen Grad des vollständigen Schließens in den reduzierten Betriebszustand versetzt wird.

7. Fahrzeugsteuerungssystem nach Anspruch 1, wobei, wenn der Fahrer eine Absicht zum Verlangsamen hat, die Steuerungseinheit die Ausführung der Steuerung verhindert.

## Revendications

1. Système de commande de véhicule pouvant être monté sur un véhicule, comprenant :
un dispositif (200) de détection de situation vers l'avant configuré pour détecter une situation à l'avant du véhicule ;
une source (20, 20', 75, 63, 51, 53) de vibrations configurée pour générer des vibrations à transmettre à un conducteur du véhicule ; et
une unité (150) de commande configurée pour, pour chaque degré d'urgence obtenu en utilisant les informations détectées par le dispositif de détection de situation vers l'avant, exécuter une commande de changement d'un état de la vibration de la source de vibrations en un état correspondant au degré d'urgence,
la source de vibrations étant au moins une source dans un groupe composé d'un moteur qui est une source motrice du véhicule, d'un moteur électrique qui est la source motrice, d'un frein du véhicule, d'un dispositif de vibrations provoquant une vibration d'une poignée du véhicule, d'un dispositif de vibrations provoquant une vibration d'un siège du véhicule, et d'un dispositif de vibrations provoquant une vibration d'un marchepied du véhicule
**caractérisé en ce que** lors de la commande, l'unité de commande change une période de retour d'un retour d'un état de fonctionnement réduit dans lequel une sortie de la source motrice est réduite à un état de fonctionnement normal dans lequel la sortie n'est pas réduite en fonction du degré d'urgence, pour changer l'état de vibration de la source motrice en l'état correspondant au degré d'urgence.

2. Système de commande de véhicule selon la revendication 1, dans lequel, lors de la commande, l'unité de commande raccourcit la période de retour lorsque le degré de l'urgence devient plus élevé, pour raccourcir une période de changement à laquelle l'état de la vibration de la source d'entraînement est changé en l'état correspondant au degré de l'urgence.

3. Système de commande de véhicule selon la revendication 2, dans lequel, lors de la commande, l'unité de commande prolonge un laps de temps pendant lequel l'état de fonctionnement réduit est présenté à mesure que le degré d'urgence devient plus élevé.

4. Système de commande de véhicule selon la revendication 1, dans lequel, lors de la commande, l'unité de commande réduit une sortie du moteur pour placer le moteur dans l'état de fonctionnement réduit en réduisant une quantité d'une alimentation en carburant vers le moteur ou en interdisant l'alimentation en carburant.

5. Système de commande de véhicule selon la revendication 1, dans lequel, lors de la commande, l'unité de commande réduit une sortie du moteur pour placer le moteur dans l'état de fonctionnement réduit en retardant un calage d'allumage du moteur ou en interdisant l'allumage.

6. Système de commande de véhicule selon la revendication 1, dans lequel, lors de la commande, l'unité de commande réduit une sortie du moteur pour placer le moteur dans l'état de fonctionnement réduit en réduisant un degré d'ouverture d'un papillon des gaz du moteur ou en réglant le degré d'ouverture à un degré de fermeture complète.

7. Système de commande de véhicule selon la revendication 1, dans lequel, lorsque le conducteur a l'intention de décélérer, l'unité de commande interdit l'exécution de la commande.
